(19) **Europäisches Patentamt / European Patent Office / Office européen des brevets**

(11) **EP 2 985 824 B1**

(12) **EUROPEAN PATENT SPECIFICATION**

(45) Date of publication and mention of the grant of the patent:
**23.06.2021 Bulletin 2021/25**

(21) Application number: **15180997.7**

(22) Date of filing: **13.08.2015**

(51) Int Cl.:
*H01M 4/62* (2006.01)      *H01M 10/052* (2010.01)
*C09C 1/44* (2006.01)      *C09C 1/46* (2006.01)
*H01M 4/131* (2010.01)      *H01M 10/44* (2006.01)
*H01M 4/505* (2010.01)      *H01M 4/525* (2010.01)
*H01M 10/0525* (2010.01)

(54) **CATHODE MATERIAL, CATHODE INCLUDING THE SAME, AND LITHIUM BATTERY INCLUDING THE CATHODE**

KATHODENMATERIAL, KATHODE DAMIT UND LITHIUMBATTERIE MIT DER KATHODE

MATÉRIAU DE CATHODE, CATHODE LE COMPRENANT ET BATTERIE AU LITHIUM COMPRENANT LA CATHODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2014 KR 20140105324**

(43) Date of publication of application:
**17.02.2016 Bulletin 2016/07**

(73) Proprietor: **Samsung SDI Co., Ltd.**
**Yongin-si, Gyeonggi-do (KR)**

(72) Inventors:
- **KIM, In**
  **Gyeonggi-do (KR)**
- **KIM, Eunjung**
  **Gyeonggi-do (KR)**
- **YANG, Sangwoon**
  **Gyeonggi-do (KR)**
- **LEE, Jongbum**
  **Gyeonggi-do (KR)**
- **KIM, Youngeun**
  **Gyeonggi-do (KR)**
- **KIM, Jaekyung**
  **Gyeonggi-do (KR)**

(74) Representative: **Mounteney, Simon James**
**Marks & Clerk LLP**
**15 Fetter Lane**
**London EC4A 1BW (GB)**

(56) References cited:
WO-A1-2014/038001    JP-A- 2003 157 846
JP-A- 2011 070 908    US-A- 5 789 114
US-A- 5 958 623    US-A1- 2012 171 566
US-A1- 2013 017 442    US-A1- 2014 000 488
US-A1- 2014 154 570

**Description**

BACKGROUND

1. Field

One or more exemplary embodiments relate to a cathode including a cathode material, and a lithium battery including the cathode. The cathode material is also described herein.

2. Description of the Related Art

Demand for secondary batteries used in mobile electronic devices for information and communication, including personal digital assistants, cell phones, and laptop computers, and in electric bicycles or electric cars is rapidly increasing. Lithium batteries, particularly, lithium ion batteries (LIBs) have high energy density and are easy to be designed and thus are used as a power source for electric vehicles or electrical power storage in addition to be used in a portable IT devices. The lithium ion batteries are required to have high energy densities and/or long lifespan characteristics.
Studies on a cathode material have been conducted in order to manufacture the lithium ion batteries having the characteristics. However, for example, microcracking may occur in a cathode active material due to decreased contact between the cathode active material and a current collector, oxidization of a conducting material, stress caused by repeated charging/discharging of the battery or a roll-press process during a cathode manufacture process, and thus, the capacity of the battery may decrease and the resistance of the battery may increase.
Therefore, a cathode material having high energy density and/or long lifespan characteristics by increasing battery capacity and decreasing resistance, a cathode including the cathode material, and a lithium battery including the cathode are needed.
WO 2014/038001 A1 relates to a nonaqueous electrolyte secondary battery.
US 5 789 114 A relates to active materials for a secondary cell and a method for making the same.
US 2013/017442 A1 relates to cathode active material compositions, cathodes prepared from the compositions, and lithium batteries including the cathodes.
JP 2003 157846 A relates to a carbon black slurry and a lithium secondary battery.
US 5 958 623 A relates to an electrochemical cell employing a fine carbon additive.
JP 2011 070908 A relates to a conductive material dispersion liquid, an electrode paste and a conductive material coating active substance.
US 2014/154570 A1 relates to a positive electrode material for a lithium ion secondary cell and a lithium ion secondary cell.
US 2014/000488 A1 relates to a method for producing a surface-treated carbon black particle aqueous dispersion and a surface-treated carbon black particle aqueous dispersion.

SUMMARY

Disclosed herein is a cathode material having high energy density and/or long lifespan characteristics by increasing battery capacity and reducing resistance.
One or more embodiments include a cathode including the cathode material.
One or more embodiments include a lithium battery including the cathode.
Additional aspects will be set forth in part in the description which follows and, in part, will be apparent from the description, or may be learned by practice of the presented embodiments.
According to a first aspect of the invention, there is provided a cathode including a cathode material and a current collector. The cathode material includes a cathode active material; and a carbon material of secondary particles consisting of a plurality of primary particles, wherein the carbon material of the secondary particles has an average chain length less than 30 primary particles connected to each other. The amount of solid of the cathode material is 65 wt% or higher based on the total weight of the cathode, and an average particle diameter of the primary particles is in a range of 18 nm to 28 nm.
According to a second aspect of the invention, there is provided a lithium battery including a cathode including the cathode material; an anode including an anode active material; and an electrolyte between the cathode and the anode.
At least some of the above and other features of the invention are set out in the claims.

BRIEF DESCRIPTION OF THE DRAWINGS

These and/or other aspects will become apparent and more readily appreciated from the following description of the embodiments, taken in conjunction with the accompanying drawings in which:

FIG. 1A is a schematic view of a cathode material according to the present disclosure;

FIG. 1B is a schematic view of a cathode material prepared in Comparative Example 1;

FIGS. 2A and 2B are images of the cathode materials on surfaces of the cathodes prepared in Example 1 and Comparative Example 1 taken by using a transmission electron microscope (HR-TEM) up to a resolution of several tens nm;

FIGS. 2C and 2D are images of the cathode materials on surfaces of the cathodes prepared in Example 1 and Comparative Example 1 taken by using a transmission electron microscope (HR-TEM) up to a resolution of several nm;

FIGS. 3A and 3B are images of the cathode materials on surfaces of the cathodes prepared in Example 1 and Comparative Example 1 taken by using a scanning electron microscope (SEM) up to a resolution of several hundred nm;

FIG. 4 is a graph showing a viscosity change with respect to a shear rate with respect to the cathode materials on surfaces of the cathodes prepared in Example 1 and Comparative Example 1;

FIG. 5 is an exploded perspective view of a lithium battery according to another embodiment;

FIG. 6 is a perspective view schematically illustrating a battery pack according to another embodiment;

FIG. 7 is a graph measuring resistances of lithium batteries prepared in Example 3 and Comparative Example 3 in SOC 20%, SOC 50%, and SOC 90%, separately;

FIG. 8 is a graph showing lifespan characteristics of the lithium batteries of Example 3 and Comparative Example 3;

FIG. 9 is a graph showing lifespan characteristics of the lithium batteries of Example 3 and Comparative Example 3 kept after 60 days; and

FIG. 10 is a graph showing lifespan characteristics of lithium batteries of Example 4 and Comparative Example 4 by using a reference performance test with respect to a 18560 cell.

DETAILED DESCRIPTION

Reference will now be made in detail to a cathode material, and to embodiments of a cathode including the cathode material, and a lithium battery including the cathode, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

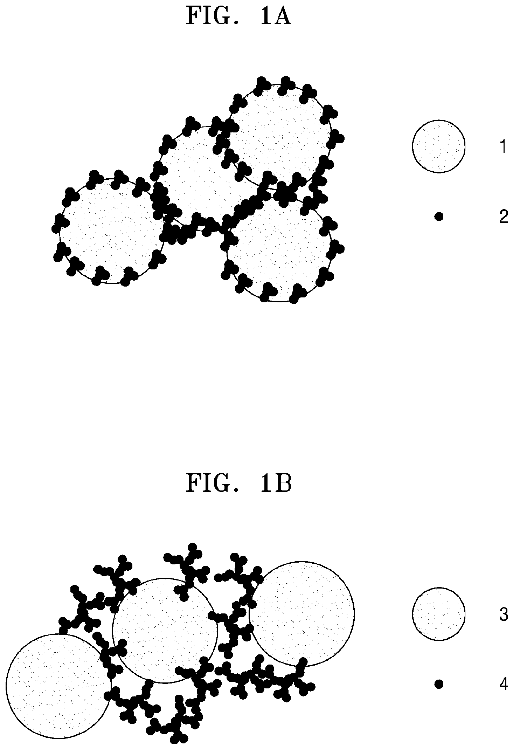

FIG. 1A is a schematic view of a cathode material according to the present disclosure. FIG. 1B is a schematic view of a cathode material according to Comparative Example 1.

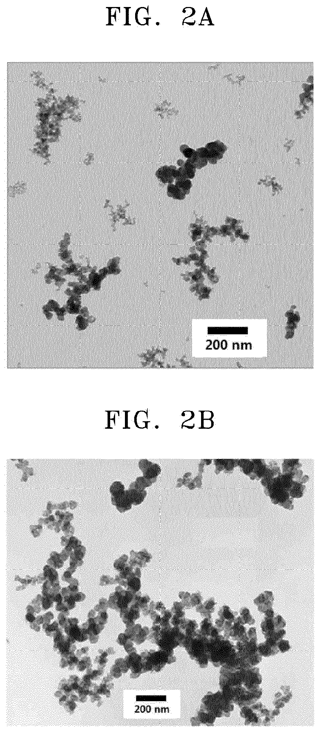

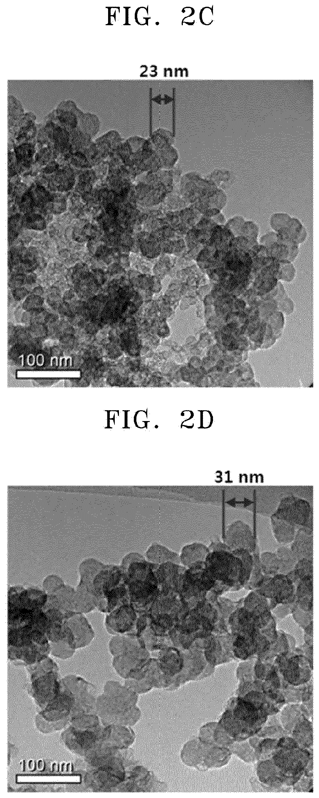

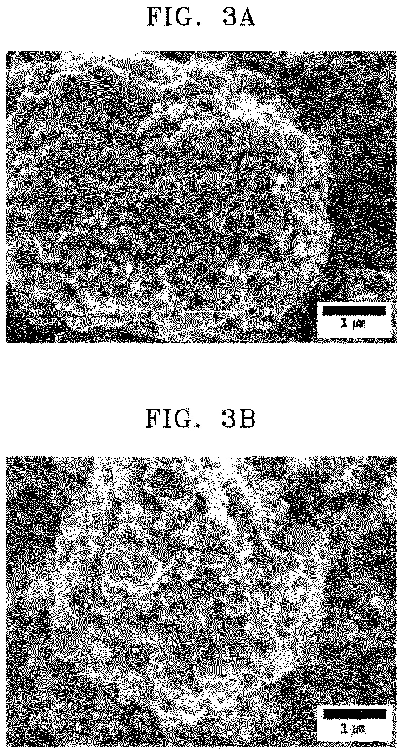

Referring to FIG. 1A, according to the present invention the cathode material included in the cathode includes a cathode active material 1; and a carbon material 2 of secondary particles consisting of a plurality of primary particles, wherein the carbon material 2 of the secondary particles has an average chain length less than 30 (e.g. about 2 to about 30) primary particles connected to each other. For example, the carbon material 2 of the secondary particles may have an average chain length that is equal to or less than 20 (e.g. about 2 to about 20) primary particles connected to each other. For example, the carbon material 2 of the secondary particles may have an average chain length that is equal to or less than 15 primary particles connected to each other. For example, the carbon material 2 of the secondary particles may have an average chain length with the range of about 2 to about 15 primary particles connected to each other. The average chain length of the carbon materials 2 of the secondary particles can be measured using transmission electron microscope (TEM) and scanning electron microscope (SEM) images (e.g. Figs 2a to 2d, 3a, and 3d). The average chain length is the mean value of chain length in the sample.

The carbon material 2 of secondary particles may generally have an average chain length that is, for example, shorter than an average chain length of a carbon material included in a cathode material, i.e. Fig. 1b. In this regard, a dispersion degree of the cathode active material 1 and the carbon material 2 included in the cathode material may increase, distance of pathways of electrons may reduce, and thus an electronic conductivity of the cathode material may increase. In addition, the energy density and/or lifespan characteristics of the cathode material may improve.

An average particle diameter of the primary particles is in a range of about 18 nm to about 28 nm. For example, an average particle diameter of the primary particles may be in a range of about 20 nm to about 25 nm (e.g. about 23 nm). The average particle diameter of the primary particles can be also measured using transmission electron microscope (TEM) and scanning electron microscope (SEM) images (e.g. Figs 2a to 2d, 3a, and 3d). The average particle diameter is the mean particle diameter "D50", which is defined as the particle diameter corresponding to the cumulative diameter distribution at 50%, which represents the particle diameter below which 50% of the sample lies.

A specific surface area of the carbon material 2 may be in a range of about 100 m$^2$/g to about 300 m$^2$/g. For example, a specific surface area of the carbon material 2 may be in a range of about 100 m$^2$/g to about 200 m$^2$/g. For example, the specific surface area of the carbon material 2 may be in a range of about 120 m$^2$/g to about 200 m$^2$/g. For example, the specific surface area of the carbon material 2 may be in a range of about 120 m$^2$/g to about 180 m$^2$/g. For example, the specific surface area of the carbon material 2 may be in a range of about 120 m$^2$/g to about 160 m$^2$/g (*e.g.* 150 m$^2$/g). The specific surface area of the carbon material 2 can be measured by Brunauer Emmett Teller (BET) analysis.

When the primary particles have an average particle diameter within the ranges above, a dispersion degree of the cathode active material 1 and the carbon material 2 included in the cathode material may further increase, a specific surface area of the primary particles may increase, and thus, the electronic conductivity of the cathode material including the primary particles may further increase. Also, the energy density and/or lifespan characteristics of the cathode material may further improve.

An oil absorption number (OAN) of the carbon material may be in a range of about 100ml/100g to about 200ml/100g. For example, the oil absorption number of the carbon material 2 may be in a range of about 100ml/100g to about 180ml/100g. For example, the oil absorption number of the carbon material 2 may be in a range of about 120ml/100g to about 180ml/100g (e.g. about 160 ml/100g). The oil absorption number (OAN) of the carbon material can be obtained by using ASTM D2414 test method. When the cathode material including the carbon material 2 is used, the dispersion of the cathode material may increase during a cathode material mixing process which may result in a decrease in the amount of an organic solvent thus used, and thus a cost of manufacturing a battery including the cathode material may decrease. Also, the amount of solid powder of the cathode material may increase due to the decrease in the amount of the organic solvent, and thus a cathode material having a stable viscosity may be manufactured.

The amount of the carbon material 2 may be in a range of about 1 wt% to about 15 wt% based on the total weight of the cathode material. For example, the amount of the carbon material 2 may be in a range of about 1 wt% to about 13 wt% based on the total weight of the cathode material. For example, the amount of the carbon material 2 may be in a range of about 1 wt% to about 10 wt% based on the total weight of the cathode material. For example, the amount of the carbon material 2 may be in a range of about 2 wt% to about 6 wt% based on the total weight of the cathode material (e.g. 3 wt% or 4 wt%). When the amount of the carbon material 2 in the cathode material is within the ranges above, the electronic conductivity and packing density of the cathode material may improve.

The carbon material 2 may include at least one selected from carbon black, acetylene black, Aerogel, and Denka black.

The cathode material may further include at least one additive selected from natural graphite, artificial graphite, carbon black, acetylene black, ketjen black, carbon fibers, metal powder, and metal fibers.

The amount of the additive may be in a range of about 0.1 wt% to about 15 wt% based on the total weight of the cathode material. For example, the amount of the additive may be in a range of about 0.1 wt% to about 10 wt%. For example, the amount of the additive may be in a range of about 0.1 wt% to about 5 wt%. For example, the amount of the additive may be in a range of about 0.1 wt% to about 3 wt%. When the amount of the additive included in the cathode material is within the ranges above, a battery including the cathode material may have an increased capacity and a decreased resistance, and thus a lithium battery provided by using the cathode material may have an improved high energy density and/or long lifespan characteristics.

The cathode material may further include a binder. Examples of the binder may include polyvinylalcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon, or a combination thereof, but embodiments are not limited thereto.

The amount of the binder may be in a range of about 0.1 wt% to about 15 wt% based on the total weight of the cathode material. For example, the amount of the binder may be in a range of about 0.1 wt% to about 10 wt%. For example, the amount of the binder may be in a range of about 0.1 wt% to about 5 wt%. For example, the amount of the binder may be in a range of about 0.1 wt% to about 3 wt%. When the amount of the binder is within these ranges, a bonding strength between the cathode material and the cathode current collector may further increase.

The cathode active material 1 may be a compound capable of reversibly intercalating/deintercalating lithium ions. Examples of the cathode active material 1 may include at least one selected from a lithium nickel oxide, a lithium cobalt oxide, a lithium cobalt aluminum oxide, a lithium nickel cobalt manganese oxide, a lithium manganese oxide, a lithium nickel oxide doped with at least one selected from chromium, zirconium, and titanium, a lithium cobalt oxide doped with at least one selected from chromium, zirconium, and titanium, a lithium cobalt aluminum oxide doped with at least one selected from chromium, zirconium, and titanium, a lithium nickel cobalt manganese oxide doped with at least one selected from chromium, zirconium, and titanium, a lithium manganese oxide doped with at least one selected from chromium, zirconium, and titanium, and an olivine-based oxide. For example, the cathode active material 1 may include $LiMn_2O_4$, $LiNi_2O_4$, $LiCoO_2$, $LiNiO_2$, $LiMnO_2$, $Li_2MnO_3$, $LiFePO_4$, $LiNi_xCo_yO_2$ (where $0<x\leq0.15$ and $0<y\leq0.85$),

$Li_aNi_bCo_cMn_dGeO_2$ (where, $0.90 \le a \le 1.8$, $0 \le b \le 0.9$, $0 \le c \le 0.5$, $0 \le d \le 0.5$, and $0.001 \le e \le 0.1$), $Li_{(3-f)}J_2(PO_4)_3$ (where $0 \le f \le 2$), or $Li_{(3-f)}Fe_2(PO_4)_3$ (where $0 \le f \le 2$). In the formulae, G is Al, Cr, Zr, Ti, or a combination thereof, and J is V, Cr, Mn, Co, Ni, Cu, or a combination thereof. However, embodiments are not limited thereto, and any material available as a cathode active material in the art may be used.

The cathode of the present invention includes the cathode material and a current collector. Examples of the current collector may include aluminum, stainless steel, nickel, titanium, platinum, or a combination thereof.

The amount of solid of the cathode material is about 65 wt% or greater based on the total weight of the cathode. For example, the amount of solid of the cathode material may be about 66 wt% or greater based on the total weight of the cathode. For example, the amount of solid of the cathode material may be about 67 wt% or greater based on the total weight of the cathode.

A bonding strength between the cathode material and the current collector may be 1.5 gf/mm or greater. For example, a bonding strength between the cathode material and the current collector may be 1.6 gf/mm or greater. For example, a bonding strength between the cathode material and the current collector may be 1.7 gf/mm or greater.

A specific resistance of the cathode may be about 12 milliohms (**m**Ω) or lower. For example, a specific resistance of the cathode may be about 11 milliohms (**m**Ω) or lower. For example, a specific resistance of the cathode may be about 10 milliohms (**m**Ω) or lower.

According to another embodiment, a lithium battery includes a cathode including the cathode material as described above; an anode including an anode active material, and an electrolyte between the cathode and the anode.

The cathode material may be, for example, a cathode material of a paste type, a slurry type, or a dispersion solution. The cathode material may be, for example, prepared as follows.

The cathode material and a solvent are mixed to prepare a cathode active material slurry, and the slurry is directly coated on an aluminum current collector to prepare the cathode. Alternatively, the cathode active material slurry may be cast on a separate support, and a cathode active material film separated from the support may be laminated on an aluminum current collector to prepare the cathode. The solvent may be an organic solvent, for example, N-methylpyrrolidone (NMP) or acetone.

Next, an anode may be prepared. The anode may be prepared in the same manner as the cathode, except that an anode active material is used instead of the cathode active material.

For example, the anode may be prepared as follows.

The anode active material, a conducting material, and, optionally, a binder, and a solvent are mixed to prepare an anode active material slurry, and the slurry may be directly coated on a copper current collector to prepare the anode. Alternatively, the anode active material slurry may be cast on a separate support, and an anode active material film separated from the support may be laminated on a copper current collector to prepare the anode.

The anode active material may include at least one selected from a material capable of reversibly intercalating and deintercalating lithium ions, a lithium metal, or a metal material alloyable with lithium.

Examples of the material capable of reversibly intercalating and deintercalating lithium ions may be a carbon-based material which may be any carbon-based anode active material that is generally used in a lithium battery, and an example of the carbon-based material may be crystalline carbon, amorphous carbon, or a mixture thereof.

Examples of the crystalline carbon include graphite, such as amorphous, plate-shaped, flake-shaped, sphere, or fibrous natural graphite or artificial graphite, and examples of the amorphous carbon include soft carbon (carbon heat treated at a relatively low temperature) or hard carbon, mesophase pitch carbide, and calcinated cokes.

Examples of the anode active material may include at least one selected from vanadium oxide, lithium vanadium oxide, Si, $SiO_x$ ($0<x<2$), a Si-Y' alloy (Y' is an alkali metal, an alkali earth metal, an element of Group 13 to Group 16, a transition metal, a rare earth element, or a combination thereof, and is not Si), Sn, $SnO_2$, and a Sn-Y' alloy (Y' is an alkali metal, an alkali earth metal, an element of Group 13 to Group 16, a transition metal, a rare earth element, or a combination thereof, and is not Sn), or a mixture of at least one selected therefrom and $SiO_2$. Examples of Y' include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

In the anode active material slurry, a conducting material, a binder, and a solvent may be the same as those used in the preparation of the cathode. In some embodiments, a plasticizer may be added to the cathode active material slurry and the anode active material slurry to form pores in an electrode plate.

Amounts of the anode active material, the conducting material, the binder, and the solvent may be the same as in conventional lithium batteries. At least one of the conducting material, the binder, and the solvent may be omitted if desired depending on the use and the structure of the lithium battery.

Next, the separator to be disposed between the cathode and the anode is prepared. The separator may be any separator available in the art which is generally used in a lithium battery. A separator having low resistance to ion movement of an electrolyte and high electrolyte uptake may be used. For example, the separator is selected from glass fibers, polyester, Teflon®, polyethylene, polypropylene, polytetrafluoroethylene (PTFE), and a combination thereof, each of which may be provided in the form of non-woven fabric or woven fabric. For example, a windable separator, such as polyethylene or polypropylene, may be used in a lithium ion battery, and a separator having high organic electrolyte uptake may be used in a lithium ion polymer battery. For example, the separator may be prepared as follows.

A separator composition is prepared by mixing a polymer resin, a filler, and a solvent. The separator composition may be directly coated or dried on an electrode to complete the formation of the separator. Alternatively, the separator composition may be cast on a separate support and then a film separated from the support is laminated on an electrode, thereby completing the formation of the separator.

The polymer resin used in preparing the separator may not be particularly limited, and all the materials used for a binder of an electrode plate may be used. For example, a vinylidene fluoride/hexafluoropropylene copolymer, polyvinylidenefluoride (PVDF), polyacrylonitrile, polymethylmetacrylate, or a mixture thereof may be used.

Then, an electrolyte is prepared.

For example, the electrolyte may be solid. For example, boron oxide, lithiumoxynitride, or the like may be used, but embodiments are not limited thereto, and the electrolyte may be any one of various materials available as a solid electrolyte in the art. The solid electrolyte may be formed on an anode by, for example, sputtering.

For example, an organic electrolytic solution may be prepared. The organic electrolytic solution may be prepared by dissolving a lithium salt in an organic solvent.

The organic solvent may be any one of various materials available as an organic solvent in the art. For example, the organic solvent may be propylene carbonate, ethylene carbonate, fluoro ethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahy-drofurane, $\gamma$-butyrolactone, dioxolane, 4-methyldioxolane, N,N-dimethylformamide, dimethylacetamide, dimethylsulfoxide, dioxane, 1,2-dimethoxyethane, sulforane, dichloroethane, chlorobenzene, nitrobenzene, diethyleneglycol, dimethylether, or a mixture thereof.

The lithium salt may be any one of various lithium salts used in the art. For example, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where, x and y are natural numbers), LiCl, LiI, or a mixture thereof.

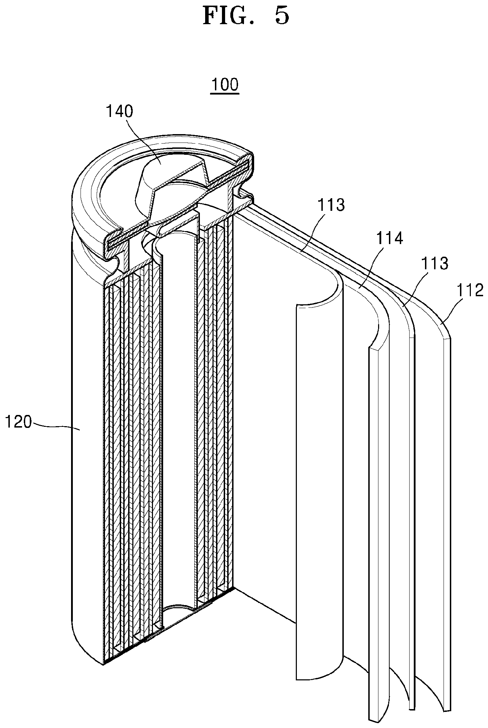

FIG. 5 is an exploded perspective view of a lithium battery 100.

The lithium battery 100 includes a cathode 114, a separator 113, and an anode 112. The cathode 114, the separator 113, and the anode 112 are wound or folded to be placed in a battery case 120. Then, an organic electrolytic solution is injected to the battery case 120, and then sealed with a cap assembly 140 to complete the manufacturing of the lithium battery 100. The battery case 120 may be cylindrical type, rectangular type, or thin-film type. For example, the lithium battery 100 may be a large thin film-type battery. The lithium battery 100 may be a lithium ion battery or may have battery assemblies. The battery assemblies are stacked in a bi-cell structure, and the resulting structure is immersed in an organic electrolytic solution, and the obtained result is housed in a pouch, followed by being sealed to complete the manufacturing of a lithium ion polymer battery.

The lithium battery 100 may be used at a current density in a range of, for example, about 2 mA/cm$^2$ to about 8 mA/cm$^2$. The lithium battery 100 may be used in an electric vehicle (EV) or a plug-in hybrid electric vehicle (PHEV).

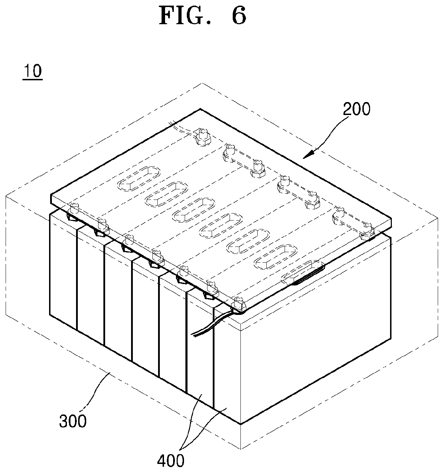

Also, a plurality of the battery assemblies may be stacked to form a battery pack. FIG. 6 is a perspective view schematically illustrating a battery pack 10. As shown in FIG. 6, the battery pack 10 includes a plurality of battery assemblies 400, a cooling member 200, and a housing 300. The plurality of battery assemblies 400 are arranged in rows, side-by-side. A battery cell 100 may be accommodated in the housing 300.

Thereinafter, one or more embodiments will be described in detail with reference to the following examples. However, these examples are not intended to limit the scope of the one or more embodiments.

Also, details associated with one or more embodiments may be readily appreciated by those of ordinary skill in the art, and thus shall be omitted herein.

[Example]

(Preparation of cathode)

**Example 1: Preparation of cathode**

92 wt% of a cathode active material, $LiNi_{0.33}Co_{0.33}Mn_{0.33}O_2$, and 3 wt% of a carbon material of secondary particles each having about 20 primary particles connected to each other, where an average particle diameter of the primary particles is about 23 nm, 1 wt% of graphite of flakes (available of Timcal), and 4 wt% of polyvinylidene fluoride (PVdF, Solef® 6020) were dispersed in N-methylpyrrolidone (NMP) to prepare a cathode active material slurry. Here, the specific surface area of the carbon material was about 150 m$^2$/g, and the oil absorption number (OAN) was about 160 ml/100g.

The cathode active material slurry was coated on an aluminum (Al) foil having a thickness of about 12 $\mu$m by

bar coating. Here, the thickness of the Al foil coated with the cathode active material slurry thereon was about 183 $\mu$m.

The resultant was put into an oven at 90°C for a primary dry for about 2 hours to evaporate NMP and in a vacuum oven at 120°C for a secondary dry for about 2 hours to completely evaporate NMP. The resultant was roll-pressed and punched to prepare a cathode having a thickness of about 140 $\mu$m. Here, the capacity of the cathode was in a range of about 2.47 mAh/cm$^2$ to about 2.88 mAh/cm$^2$, the mixture density of the cathode was about 3.193 g/cc, and the amount of solid of the cathode material was about 68.63 wt% based on the total weight of the cathode.

**Example 2: Preparation of cathode**

92 wt% of a cathode active material, prepared by mixing $LiNi_{0.33}Co_{0.33}Mn_{0.33}O_2$ and $LiMnO_2$ at a weight ratio of 50:50, and 4 wt% of a carbon material of secondary particles each having about 20 primary particles connected to each other, where an average particle diameter of the primary particles is about 23 nm, and 4 wt% of polyvinylidene fluoride (PVdF, Solef® 6020) were dispersed in NMP to prepare a cathode active material slurry. Here, the specific surface area of the carbon material was about 150 m$^2$/g, and the oil absorption number was about 160 ml/100g.

The cathode active material slurry was coated on an Al foil having a thickness of about 12 $\mu$m by bar coating. Here, the thickness of the Al foil coated with the cathode active material slurry thereon was about 180 $\mu$m.

The resultant was put into an oven at 90°C for a primary dry for about 2 hours to evaporate NMP and in a vacuum oven at 120°C for a secondary dry for about 2 hours to completely evaporate NMP. The resultant was roll-pressed and punched to prepare a cathode having a thickness of about 133 $\mu$m. Here, the capacity of the cathode was about 175 mAh/cm$^2$, and the loading level of the cathode was about 32.74 mg/cm$^2$.

**Comparative Example 1: Preparation of cathode**

92 wt% of a cathode active material, $LiNi_{0.33}Co_{0.33}Mn_{0.33}O_2$, and 3 wt% of a carbon material of secondary particles each having about 50 primary particles connected to each other, where an average particle diameter of the primary particles is about 31 nm, 1 wt% of graphite of flakes (available of Timcal), and 4 wt% of polyvinylidene fluoride (PVdF, Solef® 6020) were dispersed in NMP to prepare a cathode active material slurry. Here, the specific surface area of the carbon material was in a range of about 50 m$^2$/g to about 70 m$^2$/g, and the oil absorption number was in a range of about 220 ml/100g to about 300 ml/100g.

The cathode active material slurry was coated on an Al foil having a thickness of about 12 $\mu$m by bar coating. Here, the thickness of the Al foil coated with the cathode active material slurry thereon was about 170 $\mu$m.

The resultant was put into an oven at 90°C for a primary dry for about 2 hours to evaporate NMP and in a vacuum oven at 120°C for a secondary dry for about 2 hours to completely evaporate NMP. The resultant was roll-pressed and punched to prepare a cathode having a thickness of about 128 $\mu$m. Here, the capacity of the cathode was in a range of about 2.47 mAh/cm$^2$ to about 2.88 mAh/cm$^2$, the mixture density of the cathode was about 3.2 g/cc, and the amount of solid of the cathode material was about 63.73 wt% based on the total weight of the cathode.

**Comparative Example 2: Preparation of cathode**

92 wt% of a cathode active material, prepared by mixing $LiNi_{0.33}Co_{0.33}Mn_{0.33}O_2$ and $LiMnO_2$ at a weight ratio of 50:50, and 4 wt% of a carbon material of secondary particles each having about 50 primary particles connected to each other, where an average particle diameter of the primary particles is about 31 nm, and 4 wt% of polyvinylidene fluoride (PVdF, Solef® 6020) were dispersed in NMP to prepare a cathode active material slurry. Here, the specific surface area of the carbon material was in a range of about 50 m$^2$/g to about 70 m$^2$/g, and the oil absorption number of the carbon material was in a range of about 220 ml/100g to about 300 ml/100g.

The cathode active material slurry was coated on an Al foil having a thickness of about 12 $\mu$m by bar coating. Here, the thickness of the Al foil coated with the cathode active material slurry thereon was about 189 $\mu$m.

The resultant was put into an oven at 90°C for a primary dry for about 2 hours to evaporate NMP and in a vacuum oven at 120°C for a secondary dry for about 2 hours to completely evaporate NMP. The resultant was roll-pressed and punched to prepare a cathode having a thickness of about 133 $\mu$m. Here, the capacity of the cathode was about 175 mAh/cm$^2$, and the loading level of the cathode was about 32.74 mg/cm$^2$.

(Manufacture of lithium battery)

### Example 3: Manufacture of lithium battery

(Preparation of anode)

97.5 wt% of graphite (available from Mitsubishi Chemical), and 2.5 wt% of carboxymethylcellulose (CMC)/styrene-butadiene rubber (SBR) solution were added and mixed in an agate mortar to prepare an anode active material slurry. The anode active material slurry was coated on a copper foil having a thickness of 8 $\mu$m by bar coating. The resultant was put into an oven at 25°C, dried for about 10 hours, and then roll-pressed and punched to prepare an anode having a thickness of 133 $\mu$m.

(Preparation of electrolyte)

An electrolyte was prepared by dissolving 1.15 M of $LiPF_6$ lithium salt in a mixture solvent including ethylene carbonate, diethyl carbonate, and ethylmethyl carbonate (at a volume ratio of EC/DEC/EMC = 1:1:1).

(Manufacture of lithium battery)

The cathode prepared in Example 1, the anode, the electrolyte, and a polyethylene separator (Celgard 2320) were used to prepare a 90 Ah cell.

### Example 4: Manufacture of lithium battery

(Preparation of anode)

97.5 wt% of graphite (available from Mitsubishi Chemical) and 2.5 wt% of a carboxymethylcellulose (CMC)/styrene-butadiene rubber (SBR) solution were added and mixed in an agate mortar to prepare an anode active material slurry. The anode active material slurry was coated on a copper foil having a thickness of 8 $\mu$m by bar coating. The resultant was put into an oven at 25°C, dried for about 10 hours, and then roll-pressed and punched to prepare an anode having a thickness of 102 $\mu$m.

(Preparation of electrolyte)

An electrolyte was prepared by dissolving 1.15 M of $LiPF_6$ lithium salt in a mixture solvent including ethylene carbonate, diethyl carbonate, and ethylmethyl carbonate (at a volume ratio of EC/DEC/EMC = 1:1:1).

(Manufacture of lithium battery)

The cathode prepared in Example 2, the anode, the electrolyte, and a polyethylene separator (Celgard 2320) were used to prepare a 18650 cell.

### Comparative Example 3: Manufacture of lithium battery

A 90 Ah cell was manufactured in the same manner as in Example 3, except that the anode prepared in Comparative Example 1 was used instead of the anode prepared in Example 1.

### Comparative Example 4: Manufacture of lithium battery

A 18650 cell was manufactured in the same manner as in Example 4, except that the anode prepared in Comparative Example 2 was used instead of the anode prepared in Example 2.

### Analysis Example 1: Transmission electron microscope (TEM) and scanning electron microscope (SEM) images

The cathode materials on surfaces of the cathode prepared in Example 1 and Comparative Example 1 were observed at a resolution in a range of several tens nm to several nm by using a transmission electron microscope (HR-TEM, available from JEOL). The results are shown in FIGS. 2A to 2D.
Referring to FIGS. 2A to 2D, it was confirmed that an average particle diameter of the primary particles of the cathode material on a surface of the cathode of Example 1 was 23 nm, and an average particle diameter of the primary particles of the cathode material on a surface of the cathode of Comparative Example 1 was 31 nm. Thus, it was confirmed that the cathode material on a surface of the cathode of Example 1 had an average chain length that is equal to or less than 20 primary particles connected to each other, whereas the cathode material on a surface of the cathode of Comparative Example 1 had an average chain length that is equal to or more than 50 primary particles connected to each other.

Also, the cathode materials on surfaces of the cathodes of Example 1 and Comparative Example 1 were observed at a resolution of several hundred nm by using a scanning electron microscope (SEM, available from Hitachi, Model: S-5500). The results are shown in FIGS. 3A and 3B.

Referring to FIGS. 3A and 3B, the cathode material on a surface of the cathode of Example 1 was evenly and homogeneously distributed on a cathode active material core, compared to the cathode material on a surface of the cathode of Comparative Example 1.

**Analysis Example 2: Viscosity change property**

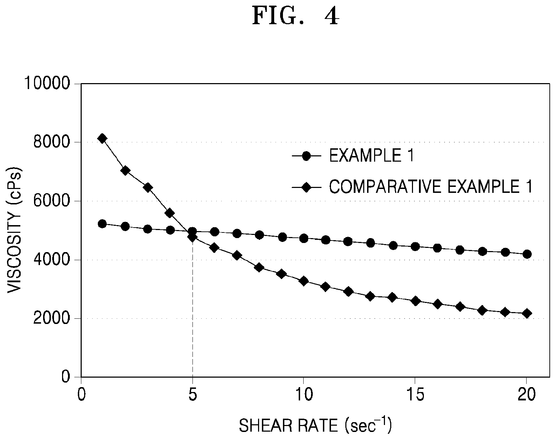

Viscosity change properties according to a shear rate with respect to the cathode materials on surfaces of the cathodes prepared in Example 1 and Comparative Example 1 were analyzed. The results are shown in FIG. 4 and Table 1.

[Table 1]

|  | Viscosity (cPs) | | |
|---|---|---|---|
|  | @ a shear rate of 5/sec | @ a shear rate of 10/sec | @ a shear rate of 15/sec |
| Example 1 | 4971 | 4740 | 4464 |
| Comparative Example 1 | 4798 | 3273 | 2608 |

Referring to FIG. 4 and Table 1, it may be confirmed that a viscosity change according to a shear rate of the cathode material on a surface of the cathode prepared in Example 1 showed highly stable movement, compared to a viscosity change according to a shear rate of the cathode material on a surface of the cathode prepared in Comparative Example 1. In this regard, it may be known that the carbon material on a cathode active material core included in the cathode material on a surface of the cathode of Example 1 may be dispersed in a relatively short period of time, compared to that of the carbon material on a cathode active material core included in the cathode material on a surface of the cathode of Comparative Example 1, and thus the cathode material of Example 1 may have stable viscosity.

**Evaluation Example 1: Evaluation of curvature**

Curvatures of the cathodes of Example 1 and Comparative Example 1 were evaluated. The results are shown in Table 2. The curvatures were evaluated in lengths by cutting each of the electrode plates of the cathodes into a size of 145 mm × 4 m, bending the electrode plate to form a curve to its maximum, and measuring a longest bending distance from a horizontal line to the electrode plate, where the horizontal line was a straight line formed by connecting two ends of the electrode plate.

[Table 2]

|  | Curvature (mm) |
|---|---|
| Example 1 | 2.5 |
| Comparative Example 1 | 8.0 |

Referring to Table 2, it may be confirmed that a curvature of the cathode prepared in Example 1 was about 1/3 or less than that of the cathode prepared in Comparative Example 1. In this regard, it may be known that the cathode of Example 1 had a high energy density, compared to that of the cathode of Comparative Example 1.

**Evaluation Example 2: Evaluation of bonding strength**

Bonding strengths between a cathode material and a current collector with respect to the cathodes prepared in Example 2 and Comparative Example 2 were evaluated. The results are shown in Table 3. The bonding strengths were evaluated by cutting the electrode plates of the cathodes into a size of 20 mmx100 mm, and measuring forces (gf/mm) that separate the cathode materials of Example 1 and Comparative Example 1 from the current collectors by performing a 180 degree peel test using a tensile strength tester available from Instron. The results are shown in Table 3.

[Table 3]

|  | Bonding strength (gf/mm) |
|---|---|
| Example 2 | 2.0 |
| Comparative Example 2 | 1.1 |

Referring to Table 3, a bonding strength between the cathode material and the current collector of the cathode of Example 2 was about 1.5 gf/mm or higher, which was higher than a bonding strength between the cathode material and the current collector of the cathode of Comparative Example 2.

**Evaluation Example 3: Evaluation of internal resistance**

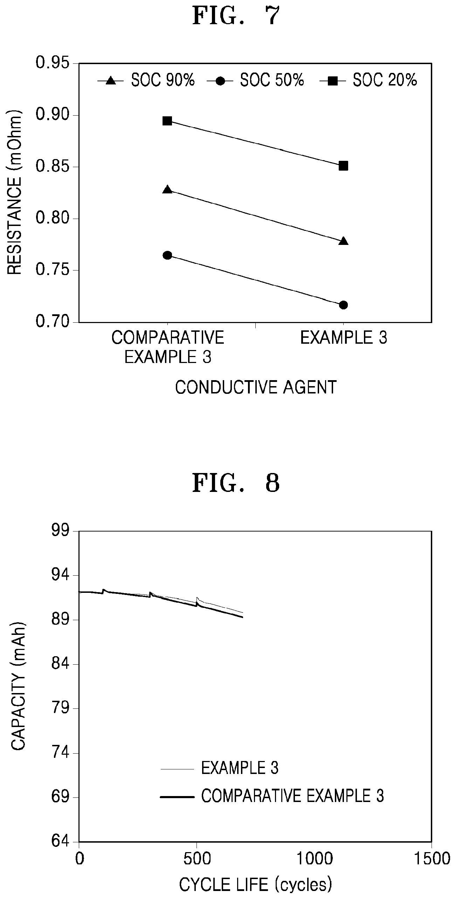

Internal resistances of the lithium batteries prepared in Example 3 and Comparative Example 3 were measured at 25°C. The results are shown in FIG. 7 and Table 4. The internal resistances were measured by manufacturing five lithium batteries according to Example 3 and five lithium batteries according to Comparative Example 3, charging/discharging the lithium batteries for 10 seconds with a current of 1/3 C in SOC 20%, SOC 50%, and SOC 90%. Here, SOC 20%, SOC 50%, and SOC 90% respectively denote charge states of 20% charging capacity, 50% charging capacity, and 90% charging capacity of the batteries when the total charging capacity of a battery is 100%. The results are shown in FIG. 7 and Table 4.

[Table 4]

|  | Internal resistance during discharging (m$\Omega$) | | |
|---|---|---|---|
|  | @SOC 20% | @SOC 50% | @SOC 90% |
| Example 3 | 0.87 | 0.75 | 0.75 |
| Comparative Example 3 | 0.90 | 0.78 | 0.78 |

Referring to FIG. 7 and Table 4, it may be confirmed that internal resistances during discharging of the lithium batteries of Example 3 were each reduced about 3% to about 4% at SOC 20%, SOC 50%, and SOC 90%, compared to internal resistances during discharging of the lithium batteries of Comparative Example 3.

**Evaluation Example 4: Evaluation of lifespan characteristics**

4.1 :Evaluation of charging/discharging characteristics

Charging/discharging characteristics of lithium batteries of Example 3 and Comparative Example 3 were evaluated. Twice formation charging/discharging were performed on the lithium batteries prepared in Example 3 and Comparative Example 3, charged at a rate of 0.2 C until a voltage of the lithium batteries reached 4.12 V, and then the lithium batteries were discharged at a rate of 0.2 C until a voltage of the lithium batteries reached 2.7 V. Here, the charging/discharging conditions were standard charging/discharging conditions, and a discharge capacity used herein was a standard capacity.
Next, the lithium batteries were charged at a rate of 1 C in the same manner as described above and discharged at a rate of 1 C until a voltage of the lithium batteries reached 2.7 V. Here, a discharge capacity (a discharge capacity after the 1st cycle) was measured. The charging/discharging process was repeated to evaluate lifespan characteristics of the lithium batteries. A discharge capacity after each cycle and a discharge capacity after 400th cycle with respect to each of the lithium batteries were measured, and a capacity retention rate was calculated therefrom. The capacity retention rate (%) was defined as in Equation 1. The results are shown in FIG. 8 and Table 5.

[Equation 1]

Capacity retention rate (%) = discharge capacity after 400th cycle/ discharge capacity after the 1st cycle

[Table 5]

|  | Discharge capacity after 1st cycle (mAh) | Discharge capacity after 400th cycle (mAh) | Capacity retention rate (%) |
|---|---|---|---|
| Example 3 | 175 | 140 | 80 |
| Comparative Example 3 | 172 | 120 | 70 |

Referring to FIG. 8 and Table 5, it may be confirmed that a discharge capacity and a capacity retention rate of the lithium batteries of Example 3 were better than those of the lithium batteries of Comparative Example 3.

4.2: Evaluation of high temperature storage characteristics

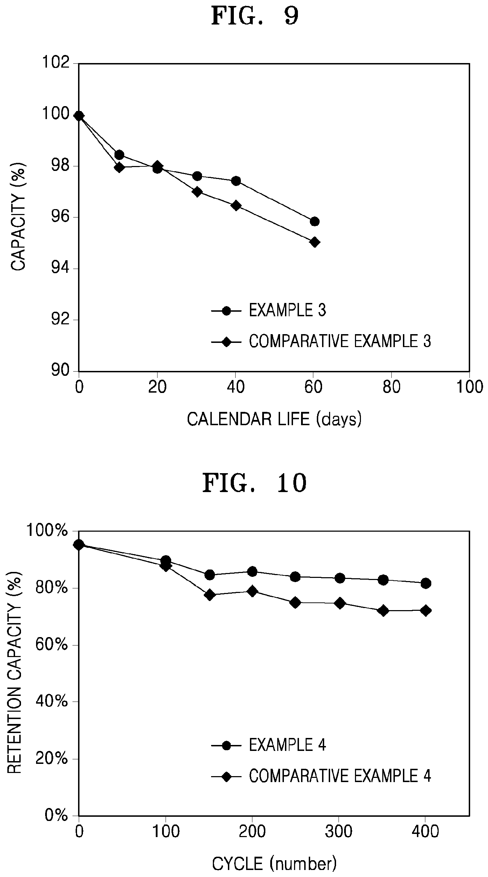

In the same manner as in 4.1, high temperature storage characteristics of the lithium batteries of Example 3 and Comparative Example 3 after 2 cycles of formation charging/discharging were evaluated. In order to evaluate the high temperature storage characteristics, the lithium batteries of Example 3 and Comparative Example 3 were charged in a room temperature chamber at a rate of 1 C until a voltage of the lithium batteries reached 4.12 V, and then discharged at a rate of 1 C until a voltage of the lithium batteries reached 2.7 V. Here, a discharge capacity (a discharge capacity after the 1st cycle) was measured. The lithium batteries were left in a chamber at a temperature of 60°C for 60 days. Then, a discharge capacity (a discharge capacity after 60 days) was measured, and a capacity retention rate was calculated therefrom. Here, the capacity retention rate (%) was defined as a % value obtained by dividing the discharge capacity after 60 days with the discharge capacity after the 1st cycle. The results are shown in FIG. 9 and Table 6.

[Table 6]

|  | Discharge capacity after 1st cycle (Ah) | Capacity retention rate (%) |
|---|---|---|
| Example 3 | 88 | 96 |
| Comparative Example 3 | 87 | 95 |

Referring to FIG. 9 and Table 6, it may be confirmed that a capacity retention rate of the lithium batteries of Example 3 was better than that of the lithium batteries of Comparative Example 3.

4.3: Evaluation of lifespan characteristics by using reference performance test

In the same manner as in 4.1, lifespan characteristics of the lithium batteries of Example 4 and Comparative Example 4 after twice formation charging/discharging were evaluated by using a reference performance test. In order to evaluate the lifespan characteristics, the lithium batteries of Example 4 and Comparative Example 4 were charged at a rate of 0.5 C until a voltage of the lithium batteries reached 4.12 V, and then discharged at a rate of 0.2 C until a voltage of the lithium batteries reached 2.7 V. Here, the charging/discharging conditions were standard charging/discharging conditions, and a discharge capacity used herein was a standard capacity.

Next, the lithium batteries were charged at a rate of 2 C in the same manner as described above and discharged at a rate of 3 C until a voltage of the lithium batteries reached 2.7 V. Here, a discharge capacity (a discharge capacity after the 1st cycle) was measured. The charging/discharging process was repeated to evaluate lifespan characteristics of the lithium batteries. A discharge capacity after each cycle and a discharge capacity after the 400th cycle with respect to each of the lithium batteries were measured, and a capacity retention rate was calculated therefrom. The capacity retention rate (%) was defined as in Equation 1. The results are shown in FIG. 10 and Table 7.

[Table 7]

|  | Discharge capacity after 1st cycle (mAh) | Discharge capacity after 400th cycle (mAh) | Capacity retention rate (%) |
|---|---|---|---|
| Example 4 | 175 | 146 | 83 |
| Comparative Example 4 | 172 | 128 | 74 |

Referring to FIG. 10 and Table 8, it may be confirmed that a discharge capacity and a capacity retention rate of the lithium battery of Example 4 were better than those of the lithium battery of Comparative Example 4.

As described above, a cathode material disclosed herein may increase battery capacity and reduce resistance, and thus may provide a cathode and a lithium battery having a high energy density and/or long lifespan characteristics. Also, the cathode material may reduce the amount of an organic solvent used in the preparation, and thus may reduce a manufacturing cost of the cathode material.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the scope as defined by the following claims.

## Claims

1. A cathode comprising:

    a cathode material; and
    a current collector, wherein:

    the cathode material comprises a cathode active material and a carbon material of secondary particles consisting of a plurality of primary particles, wherein the carbon material of secondary particles has an average chain length less than 30 primary particles connected to each other; wherein
    the amount of solid of the cathode material is 65 wt% or higher based on the total weight of the cathode; and.

    wherein an average particle diameter of the primary particles is in a range of 18 nm to 28 nm.

2. A cathode according to claim 1, wherein a bonding strength between the cathode material and the current collector is 1.5 gf/mm or greater.

3. A cathode according to claim 1 or claim 2, wherein a specific surface area of the carbon material is in a range of 100 m$^2$/g to 300 m$^2$/g.

4. A cathode according to any one of claims 1 to 3, wherein an oil absorption number (OAN) of the carbon material is in a range of 100 ml/100 g to 200 ml/100 g.

5. A cathode according to any one of claims 1 to 4, wherein the amount of the carbon material is in a range of 1 wt% to 15 wt% based on the total weight of the cathode material.

6. A cathode according to any one of claims 1 to 5, wherein the carbon material comprises at least one selected from carbon black, acetylene black, Aerogel, and Denka Black.

7. A cathode according to any one of claims 1 to 6, wherein the cathode material further comprises at least one additive selected from natural graphite, artificial graphite, carbon black, acetylene black, ketjen black, carbon fibers, metal powder, and metal fibers, optionally wherein the amount of the additive is in a range of 0.1 wt% to 15 wt% based on the total weight of the cathode material.

8. A cathode according to any one of claims 1 to 7, wherein the cathode material further comprises a binder, optionally wherein the amount of the binder is in a range of 0.1 wt% to 15 wt% based on the total weight of the cathode material.

9. A cathode according to any one of claims 1 to 8, wherein the cathode active material is a compound capable of reversibly intercalating and deintercalating lithium ions.

10. A cathode according to any one of claims 1 to 9, wherein the cathode active material comprises at least one selected from a lithium nickel oxide, a lithium cobalt oxide, a lithium cobalt aluminum oxide, a lithium nickel cobalt manganese oxide, a lithium manganese oxide, a lithium nickel oxide doped with at least one selected from chromium, zirconium, and titanium, a lithium cobalt oxide doped with at least one selected from chromium, zirconium, and titanium, a lithium cobalt aluminum oxide doped with at least one selected from chromium, zirconium, and titanium, a lithium nickel cobalt manganese oxide doped with at least one selected from chromium, zirconium, and titanium, a lithium manganese oxide doped with at least one selected from chromium, zirconium, and titanium, and an olivine-based oxide.

**11.** A lithium battery comprising
a cathode comprising the cathode material according to any one of claims 1 to 10;
an anode comprising an anode active material; and
an electrolyte between the cathode and the anode.

**12.** A lithium battery according to claim 11, wherein:

the anode active material comprises at least one selected from a material capable of reversibly intercalating and deintercalating lithium ions, a lithium metal, or a metal material alloyable with lithium; and/or
the lithium battery is used at a current density in a range of 2 mA/cm$^2$ to 8 mA/cm$^2$.

**13.** A lithium battery according to claim 11 or claim 12, wherein the lithium battery is for an electrical vehicle (EV) or a plug-in hybrid electric vehicle (PHEV).

**Patentansprüche**

**1.** Kathode, umfassend:

ein Kathodenmaterial; und
einen Stromkollektor, wobei:

das Kathodenmaterial ein aktives Kathodenmaterial und ein Kohlenstoffmaterial aus sekundären Partikeln umfasst, bestehend aus einer Mehrzahl von primären Partikeln, wobei das Kohlenstoffmaterial aus sekundären Partikeln eine durchschnittliche Kettenlänge von weniger als 30 primären Partikeln aufweist, die mit einander verbunden sind; wobei
die Menge an Feststoff des Kathodenmaterials 65 Gew.-% oder mehr beträgt, basierend auf dem Gesamtgewicht der Kathode; und
wobei ein durchschnittlicher Partikeldurchmesser der primären Partikeln in einem Bereich von 18 nm bis 28 nm liegt.

**2.** Kathode nach Anspruch 1, wobei eine Haftfestigkeit zwischen dem Kohlenstoffmaterial und dem Stromkollektor 1,5 gf/mm oder mehr beträgt.

**3.** Kathode nach Anspruch 1 oder Anspruch 2, wobei eine spezifische Oberfläche des Kohlenstoffmaterials im Bereich von 100m$^2$/g bis 300 m$^2$/g liegt.

**4.** Kathode nach einem der Ansprüche 1 bis 3, wobei eine Ölabsorptionszahl (OAN) des Kohlenstoffmaterials in einem Bereich von 100 ml/100 g bis 200 ml/100 g liegt.

**5.** Kathode nach einem der Ansprüche 1 bis 4, wobei die Menge an Kohlenstoffmaterial in einem Bereich von 1 Gew.-% bis 15 Gew.-% liegt, basierend auf dem Gesamtgewicht des Kathodenmaterials.

**6.** Kathode nach einem der Ansprüche 1 bis 5, wobei das Kohlenstoffmaterial mindestens eines ausgewählt aus Ruß, Acetylenruß, Aerogel und Denka Black umfasst.

**7.** Kathode nach einem der vorhergehenden Ansprüche 1 bis 6, wobei das Kathodenmaterial ferner mindestens ein Additiv umfasst, ausgewählt aus natürlichem Graphit, künstlichem Graphit, Ruß, Acetylenruß, Ketjen Ruß, Kohlenstofffasern, Metallpulver und Metallfasern, optional wobei die Menge an Additiv in einem Bereich von 0,1 Gew.-% bis 15 Gew.-% liegt, basierend auf dem Gesamtgewicht des Kathodenmaterials.

**8.** Kathode nach einem der Ansprüche 1 bis 7, wobei das Kathodenmaterial ferner ein Bindemittel umfasst, optional wobei die Menge an Bindemittel in einem Bereich von 0,1 Gew.-% bis 15 Gew.-% liegt, basierend auf dem Gesamtgewicht des Kathodenmaterials.

9. Kathode nach einem der vorhergehenden Ansprüche 1 bis 8, wobei das aktive Kathodenmaterial eine Verbindung ist, die in der Lage ist, reversibel Lithiumionen zu interkalieren und deinterkalieren.

10. Kathode nach einem der Ansprüche 1 bis 9, wobei das aktive Kathodenmaterial mindestens eines ausgewählt aus Lithiumnickeloxid, Lithiumkobaltoxid, Lithiumkobaltaluminiumoxid, Lithiumnickelkobaltmanganoxid, Lithiummanganoxid, Lithiumnickeloxid, dotiert mit mindestens einem ausgewählt aus Chrom, Zirkon, und Titan, einem Lithiumkobaltoxid, dotiert mit mindestens einem, ausgewählt aus Chrom, Zirkon, und Titan, einem Lithiumkobaltaluminiumoxid, dotiert mit mindestens einem, ausgewählt aus Chrom, Zirkon, und Titan, einem Lithiumnickelkobaltmanganoxid, dotiert mit mindestens einem ausgewählt aus Chrom, Zirkon und Titan, einem Lithiummanganoxid, dotiert mit mindestens einem, ausgewählt aus Chrom, Zirkon und Titan, und einem Olivin-basierten Oxid.

11. Lithiumbatterie, umfassend
eine Kathode, umfassend das Kathodenmaterial nach einem der Ansprüche 1 bis 10;
eine Anode, umfassend ein aktives Anodenmaterial; und
einen Elektrolyten zwischen der Kathode und der Anode.

12. Lithiumbatterie nach Anspruch 11, wobei:

das aktive Anodenmaterial mindestens eines umfasst, ausgewählt aus einem Material, welches in der Lage ist, reversibel Lithiumionen zu interkalieren und deinterkalieren, einem Lithiummetall oder ein Metallmaterial, welches mit Lithium eine Legierung bilden kann; und/oder
die Lithiumbatterie mit einer Stromdichte in einem Bereich von 2 mA/cm$^2$ bis 8 mA/cm$^2$ verwendet wird.

13. Lithiumbatterie nach Anspruch 11 oder Anspruch 12, wobei die Lithiumbatterie für ein elektrisches Fahrzeug (EV) oder ein Plug-in hybrides elektrisches Fahrzeug (PHEV) verwendet wird.

**Revendications**

1. Cathode comprenant :

un matériau de cathode ; et
un collecteur de courant ; dans laquelle :

le matériau de cathode comprend un matériau actif de cathode et un matériau de carbone de particules secondaires qui sont constituées d'une pluralité de particules primaires, dans laquelle le matériau de carbone de particules secondaires présente une longueur de chaîne moyenne inférieure à 30 particules primaires qui sont connectées les unes aux autres ; dans laquelle
la quantité de solide du matériau de cathode est de 65 % en poids ou plus sur la base du poids total de la cathode ; et
dans laquelle un diamètre de particule moyen des particules primaires s'inscrit dans une plage de 18 nm à 28 nm.

2. Cathode selon la revendication 1, dans laquelle une résistance de collage entre le matériau de carbone et le collecteur de courant est de 1,5 gf/mm ou plus.

3. Cathode selon la revendication 1 ou la revendication 2, dans laquelle une aire de surface spécifique du matériau de carbone s'inscrit dans une plage de 100 m$^2$/g à 300 m$^2$/g.

4. Cathode selon l'une quelconque des revendications 1 à 3, dans laquelle un nombre d'absorption d'huile (OAN) du matériau de carbone s'inscrit dans une plage de 100 ml/100 g à 200 ml/100 g.

5. Cathode selon l'une quelconque des revendications 1 à 4, dans laquelle la quantité du matériau de carbone s'inscrit dans une plage de 1 % en poids à 15 % en poids sur la base du poids total du matériau de cathode.

6. Cathode selon l'une quelconque des revendications 1 à 5, dans laquelle le matériau de carbone comprend au moins l'un sélectionné parmi le noir de carbone, le noir d'acétylène, l'aérogel et le noir Denka.

7. Cathode selon l'une quelconque des revendications 1 à 6, dans laquelle le matériau de cathode comprend en outre au moins un additif qui est sélectionné parmi le graphite naturel, le graphite artificiel, le noir de carbone, le noir d'acétylène, le noir Ketjen, les fibres de carbone, la poudre métallique et les fibres métalliques, facultativement dans laquelle la quantité de l'additif s'inscrit dans une plage de 0,1 % en poids à 15 % en poids sur la base du poids total du matériau de cathode.

8. Cathode selon l'une quelconque des revendications 1 à 7, dans laquelle le matériau de cathode comprend en outre un agent de liaison, facultativement dans laquelle la quantité de l'agent de liaison s'inscrit dans une plage de 0,1 % en poids à 15 % en poids sur la base du poids total du matériau de cathode.

9. Cathode selon l'une quelconque des revendications 1 à 8, dans laquelle le matériau actif de cathode est un composé qui permet d'intercaler et de désintercaler de façon réversible des ions de lithium.

10. Cathode selon l'une quelconque des revendications 1 à 9, dans laquelle le matériau actif de cathode comprend au moins l'un sélectionné parmi un oxyde de lithium et de nickel, un oxyde de lithium et de cobalt, un oxyde de lithium, de cobalt et d'aluminium, un oxyde de lithium, de nickel, de cobalt et de manganèse, un oxyde de lithium et de manganèse, un oxyde de lithium et de nickel dopé avec au moins l'un sélectionné parmi le chrome, le zirconium et le titane, un oxyde de lithium et de cobalt dopé avec au moins l'un sélectionné parmi le chrome, le zirconium et le titane, un oxyde de lithium, de cobalt et d'aluminium dopé avec au moins l'un sélectionné parmi le chrome, le zirconium et le titane, un oxyde de lithium, de nickel, de cobalt et de manganèse dopé avec au moins l'un sélectionné parmi le chrome, le zirconium et le titane, un oxyde de lithium et de manganèse dopé avec au moins l'un sélectionné parmi le chrome, le zirconium et le titane, et un oxyde à base d'olivine.

11. Batterie au lithium comprenant :

une cathode qui comprend le matériau de cathode selon l'une quelconque des revendications 1 à 10 ;
une anode qui comprend un matériau actif d'anode ; et
un électrolyte entre la cathode et l'anode.

12. Batterie au lithium selon la revendication 11, dans laquelle :

le matériau actif d'anode comprend au moins l'un sélectionné parmi un matériau qui permet d'intercaler et de désintercaler de façon réversible des ions de lithium, un lithium métal ou un matériau de métal qui peut être allié avec le lithium ; et/ou
la batterie au lithium est utilisée à une densité de courant qui s'inscrit dans une plage de 2 mA/cm$^2$ à 8 mA/cm$^2$.

13. Batterie au lithium selon la revendication 11 ou la revendication 12, dans laquelle la batterie au lithium est destinée à un véhicule électrique (EV) ou à un véhicule électrique hybride rechargeable (PHEV).

FIG. 1A

FIG. 1B

FIG. 2A

FIG. 2B

FIG. 2C

FIG. 2D

## FIG. 3A

## FIG. 3B

FIG. 4

# FIG. 5

# FIG. 6

## FIG. 7

## FIG. 8

FIG. 9

FIG. 10

**EP 2 985 824 B1**

**Patent documents cited in the description**

- WO 2014038001 A1
- US 5789114 A
- US 2013017442 A1
- JP 2003157846 A
- US 5958623 A
- JP 2011070908 A
- US 2014154570 A1
- US 2014000488 A1